# EUROPÄISCHE PATENTSCHRIFT

(11) **EP 3 166 696 B1**
(45) Veröffentlichungstag und Bekanntmachung des Hinweises auf die Patenterteilung: **10.01.2018**
(21) Anmeldenummer: 15728755.8
(22) Anmeldetag: 27.04.2015
(51) Int. Cl.: A62C 2/22, B65G 21/00, E06B 3/90, A62C 3/00

(54) **VORRICHTUNG ZUM BEREITSTELLEN EINES ÜBERGANGS**
DEVICE FOR PROVIDING A CROSSOVER POINT
DISPOSITIF DE FOURNITURE D'UNE TRANSITION

(30) Priorität: 08.07.2014 DE 102014109495
(43) Veröffentlichungstag der Anmeldung: 17.05.2017
(73) Patentinhaber: Amrona AG, 6304 Zug (CH)
(72) Erfinder: STEHR, Peter Bernhard, 31515 Wunstorf (DE)
(74) Vertreter: Rupprecht, Kay
(86) Internationale Anmeldenummer: PCT/EP2015/059042
(87) Internationale Veröffentlichungsnummer: WO 2016/005067

(56) Entgegenhaltungen:
- EP-A2- 1 172 127
- DE-C1- 3 150 777

## Beschreibung

Die Erfindung betrifft eine Vorrichtung zum Bereitstellen eines Übergangs zwischen einem ersten Bereich und einem mit Hilfe einer Wand von dem ersten Bereich hermetisch abgegrenzten zweiten Bereich.

In der Brandschutztechnik ist es bekannt, Bereiche mit hoher Feuergefährdung (mit hoher Brandlast) mit einer dauerinertisierten oder dauerhaft teilinertisierten Atmosphäre zu versehen. Zu diesem Zweck wird ein geeignetes Inertgas ggf. konzentrationsüberwacht in den Bereich mit hoher Brandlast eingeleitet. Der eingeleitete Anteil an Inertgas verdrängt zumindest teilweise den Sauerstoff der Raumatmosphäre, sodass der Sauerstoffgehalt innerhalb des Bereichs auf ein Niveau abgesenkt wird, auf welchem zumindest eine wirkungsvolle Brandhemmung oder ggf. sogar eine vollständige Brandunterdrückung stattfinden kann.

Insbesondere in Lagerräumen wie beispielsweise Kleinteilelagern herrscht eine derartige hohe Brandlast vor, was beispielsweise von Verpackungen aus Karton oder Kunststoff, aus Kleinladungsträgern oder dergleichen herrühren kann. Hierbei ist es bekannt, den Sauerstoffgehalt durch Einleitung eines geeigneten Inertgases wie beispielsweise Stickstoff in diesem Kleinteilelager dauerhaft zu reduzieren. Insbesondere für vollautomatisierte Kleinteilelager stellt dies eine gute Brandschutzlösung dar, jedoch sind diese Lager oft mit einer oder mehreren Öffnungen versehen, welche der Ein- bzw. Auslagerung der Teile dienen.

Aus der Druckschrift EP 1 172 127 A2 ist eine derartige dauerhafte Sauerstoffreduzierung in einem Lagerraum und dergleichen bekannt. Ein derartiger in der EP 1 172 127 A2 offenbarter Lagerraum ist mit einer Schleuse zum Ein- und Ausschleusen von Gegenständen versehen. Es ist offenbart, dass es zusammen mit den in den inertisierten Raum eingebrachten Gegenständen zum Eintrag von Sauerstoff in den Lagerraum kommt, weshalb die sauerstoffreduzierte (inerte) Atmosphäre innerhalb des Lagerraums durch späteren Eintrag von Inertgas wiederhergestellt werden muss.
Bei der aus der EP 1 172 127 A2 bekannten Lösung ist es nun vorgesehen, dass der Schleusenraum der sogenannten Inertisierungsschleuse, die dem Ein- bzw. Auslagern von Gegenständen dient, mit einer eingangsseitigen verschließbaren Öffnung sowie einer in den Lagerraum mündenden ausgangsseitigen verschließbaren Öffnung ausgestattet ist. Um Kleinteilegut einzulagern, wird demnach zunächst die eingangsseitige Öffnung der Inertisierungsschleuse geöffnet, während die ausgangsseitige, das heißt in den Lagerraum mündende Öffnung der Inertisierungschleuse geschlossen ist. Nachdem das einzulagernde Gut in die Schleuse eingebracht wurde, werden beide Schleusentüren geschlossen und die Inertisierungsschleuse mit Inertgas gespült. Anschließend wird die ausgangsseitige in den Lagerraum mündende Schleusenöffnung geöffnet, sodass es zu keinem unerwünschten Eintrag von Sauerstoff in den inertisierten Lagerraum kommt.
Eine derartige vorbekannte Inertisierungsschleuse für einen inertisierten bzw. inertisierbaren Lagerraum weist nun den Nachteil auf, dass sich ein verhältnisweise großer Platzbedarf für diese Schleuse ergibt und unter anderem Antriebe für das eingangsseitige Verschlusselement sowie für das ausgangsseitige Verschlusselement der Inertisierungsschleuse vorgesehen werden müssen. Eine Inertisierungsschleuse gemäß dem Oberbegriff des Anspruchs 1 ist auch in DE 3151506 A1 offenbart. Es ist daher die Aufgabe der vorliegenden Erfindung, eine Vorrichtung der eingangsgenannten Art anzugeben, welche vergleichsweise kleine Abmessungen aufweist und konstruktiv einfach und damit kostengünstig gestaltbar ist.
Die Aufgabe wird gelöst durch eine Vorrichtung gemäß dem unabhängigen Patentanspruch 1.

Insbesondere wird die Aufgabe gelöst durch eine Vorrichtung zum Bereitstellen eines Übergangs zwischen einem ersten und mit Hilfe einer Wand von dem ersten Bereich hermetisch abgegrenzten zweiten Bereich, wobei die Vorrichtung einen in eine in der Wand vorgesehene Öffnung einsetzbaren Schleusenraum aufweist, welcher eine erste Öffnung aufweist, welche einen Übergang zwischen dem ersten Bereich und dem Schleusenraum bildet, und welcher eine zweite Öffnung aufweist, welche einen Übergang zwischen dem zweiten Bereich und dem Schleusenraum bildet; und wobei die Vorrichtung mindestens ein umlaufendes Element aufweist, welches mindestens eine Durchlassöffnung aufweist und relativ zu der ersten und der zweiten Öffnung des Schleusenraums derart bewegbar ist, dass wahlweise zumindest ein erster Zustand, in welchem die mindestens eine Durchlassöffnung im wesentlichen mit der ersten Öffnung des Schleusenraums fluchtet und einen Zugang von dem ersten Bereich in den Schleusenraum ermöglichst, und das umlaufende Element in die zweite Öffnung des Schleusenraums im wesentlichen vollständig bedeckt, und ein zweiter Zustand realisierbar sind, in welchem die mindestens eine Durchlassöffnung oder mindestens eine weitere Durchlassöffnung im wesentlichen mit der zweiten Öffnung des Schleusenraums fluchtet und einen Zugang von dem zweiten Bereich in den Schleusenraum ermöglicht und das umlaufende Element die erste Öffnung des Schleusenraums im wesentlichen vollständig bedeckt, wobei das mindestens eine umlaufende Element zwei Durchlassöffnungen aufweist, die bezogen auf ihre relative Lage zueinander derart angeordnet sind, dass in einem Zustand, in welchem die erste Durchlassöffnung mit einer der beiden Öffnungen des Schleusenraums fluchtet, die zweite Durchlassöffnung mit keiner der beiden Öffnungen des Schleusenraumes fluchtet, und dass in einem Zustand, in welchem die zweite Durchlassöffnung mit einer der Öffnungen des Schleusenraums fluchtet, die erste Durchlassöffnung mit keiner der beiden Öffnungen des Schleusenraums fluchtet. Der erste Bereich stellt hierbei beispielsweise die Umgebungsatmosphäre dar, wohin gegen der davon hermetisch abgegrenzte zweite Bereich einen vorzugsweise dauerinertisierten bzw. teilweiseinertisierten Raum darstellt, wie beispielsweise einen Lagerraum oder dergleichen. Dieser zweite Bereich ist derart von dem ersten Bereich hermetisch abgegrenzt, dass im wesentlichen kein Austausch der Raumatmosphären untereinander stattfinden kann. Es kann jedoch auch vorgesehen sein, dass lediglich ein definierter Übergang zwischen den beiden Raumatmosphären stattfindet, beispielsweise durch das Vorsehen einer Durchgangsöffnung von definierter Größe.
Um den zweiten Bereich, beispielsweise also das Lager, beschicken zu können, ist in der die beiden Bereiche trennenden Wand nun ein einsetzbarer Schleusenraum vorgesehen, der seinerseits zwei Öffnung aufweist, nämlich eine Öffnung, welche einen Übergang zwischen dem ersten Bereich und dem Schleusenraum bildet, und eine zweite Öffnung die den Übergang zwischen dem zweiten Bereich und dem Schleusenraum bildet.

Das nun vorgesehene mindestens eine umlaufende Element ist nun bewegbar ausgebildet, das heißt seine zwei Durchlassöffnungen lässt sich in einen Zustand bewegen, in welchem diese mindestens eine Durchlassöffnung im wesentlichen mit der ersten Öffnung des Schleusenraums fluchtet. Dadurch ist ein Zugang von dem ersten Bereich in den Schleusenraum durch eben diese mindestens eine Durchlassöffnung des mindestens einen umlaufenden Elements möglich. Durch die Bewegbarkeit ist nun das mindestens eine umlaufende Element derart ausrichtbar, dass mindestens eine weitere in dem umlaufende Element vorgesehene Durchlassöffnung so ausgerichtet wird, dass diese mit der zweiten Öffnung des Schleusenraum fluchtet. Dann ist ein Zugang von dem zweiten Bereich in den Schleusenraum möglich, wobei das umlaufende Element die erste Öffnung des Schleusenraums im wesentlichen vollständig bedeckt, sodass der Zugang vom ersten Bereich in den Schleusenraum in dieser Stellung unterbrochen ist.

Dadurch, dass das umlaufende Element mit seinen zwei Durchlassöffnungen selbst bewegt wird, ist für eine derartige Vorrichtung ein sehr einfaches Antriebskonzept möglich. Insbesondere ist ein relativ platzsparender Antrieb zum Bewegen des mindestens einen umlaufenden Elements möglich, beispielsweise also nur ein einziger Antrieb. Hierdurch ist eine derartige Vorrichtung besonders gut dazu geeignet an einer vorhandenen Öffnung einer Wand zwischen einem ersten Bereich und einem hermetisch davon abgrenzbaren zweiten Bereich nachgerüstet zu werden.
Die Bedeckung der zweiten Öffnung durch das mindestens eine umlaufende Element in der Stellung, in welcher die mindestens eine Durchlassöffnung des mindestens einen umlaufenden Elements im wesentlichen mit der ersten Öffnung des Schleusenraums fluchtet und auch die Bedeckung dieser ersten Öffnung des Schleusenraums in derjenigen Position des mindestens umlaufenden Elements, in welcher dessen mindestens eine Durchlassöffnung mit der zweiten Öffnung des Schleusenraums fluchtet, ist hierbei in besonders bevorzugter Weise gasdicht ausgeführt, sodass die im wesentlichen hermetische Trennung zwischen dem ersten Bereich und zweiten Bereich jederzeit aufrechterhalten wird. Mit anderen Worten: Es ist zu keiner Zeit eine Stellung vorgesehen, in welcher das mindestens eine umlaufende Element einen direkten Durchtritt durch die erste Öffnung in den Schleusenraum hinein und ohne Veränderung von dessen Position durch die zweite Öffnung in den zweiten Bereich ermöglicht. Hierdurch ist gewährleistet, dass kein Gasaustausch zwischen der in dem zweiten Bereich befindlichen inertisierten oder teilinertisierten Atmosphäre und der in dem ersten Bereich vorherrschenden Raumatmosphäre (z.B. die Umgebungsatmosphäre) oder dergleichen vonstatten geht.

Durch die im wesentlichen vollständige Bedeckung der zum jeweiligen Zeitpunkt nicht benötigten Durchlassöffnung durch das mindestens eine umlaufende Element und die damit einhergehende hermetische (gasdichte) Abdeckung findet dann nur ein auf das Gasvolumen bezogen definierter Austausch zwischen den unterschiedlichen Raumatmosphären statt, wenn bei einem Beschickungsvorgang der Schleuse die beiden unterschiedlichen Öffnungszustände nacheinander angenommen werden.

Selbstverständlich ist es jedoch auch möglich, in der Zwischenzeit während des Bewegens des mindestens einen umlaufenden Elements ein Spülen des Schleusenraums mit Inertgas durchzuführen, sodass ein reduzierter oder gar ganz unterbundener Sauerstoffeintrag in den inertisierten bzw. teilinertisierten zweiten Bereich stattfindet.

Hierfür kann es zusätzlich vorgesehen sein, dass das mindestens eine umlaufende Element für einen derartigen Einschleusvorgang definiert in eine Stellung bringbar ist, in welcher das mindestens eine umlaufende Element beide Durchlassöffnungen im wesentlichen vollständig bedeckt und damit eine im wesentlichen vollständige gasdichte Abschottung zwischen dem ersten Bereich und dem zweiten Bereich herstellt, damit ein definierter Spülvorgang in einem solchen Zeitraum stattfinden kann.

Es ist natürlich auch denkbar, einen derartigen vollständig verschlossenen Zustand des Schleusenraums mittels des umlaufenden Elements hierzustellen, das heißt, einen Zustand, in welchem die mindestens eine Öffnung des mindestens einen umlaufenden Elements mit keiner der beiden Öffnungen des Schleusenraums fluchtet, wenn kein Schleusungsvorgang durch den Schleusenraum stattfinden soll. In diesem Fall kann eine definierte Sauerstoffkonzentration durch Einleiten eines entsprechenden Inertgases in den Schleusenraum selbst während derartiger Nicht-Beschickungszeiten stattfinden, beispielsweise dann, wenn während dieser Zeiträume eine ausreichend große Menge zuführbaren Inertgases beispielsweise aus einem Stickstoffgenerator oder dergleichen zur Verfügung steht. Soll dann ein Beschickungsvorgang von außen, das heißt aus dem ersten Bereich kommend stattfinden, so wird zwar kurzzeitig ein Zustand hergestellt, in welchem der Schleusenraum über die mindestens eine Durchlassöffnung des mindestens einen umlaufenden Elements mit dem ersten Bereich in Gasaustausch steht, nämlich dann, wenn die mindestens eine Durchlassöffnung des mindestens einen umlaufenden Elements mit der ersten Öffnung des Schleusenraums fluchtet. Wird dieser Zeitraum jedoch so kurz wie möglich gehalten, so findet auch dann kein vollständiger Gasaustausch statt, sodass während des Bewegungsvorganges des mindestens einen umlaufenden Elements in die zweite Stellung ein Spülen des Schleusenraums mit Inertgas nicht oder nur in verringertem Umfang vonnöten ist.

Vorteilhafte Weiterbildungen der erfindungsgemäßen Lösung sind in den abhängigen Ansprüchen angegeben.

So ist es beispielsweise vorgesehen, dass das mindestens eine umlaufende Element ein innerhalb des Schleusenraums angeordnetes und relativ zu den Öffnungen des Schleusenraums vorzugsweise um eine horizontale oder vertikale Mittelachse des Schleusenraums verschiebbar gelagertes Umlauftor ist. Eine derartige Lösung ist dahingehend besonders einfach, als dass ein derartiges umlaufendes Tor nur eine vergleichsweise unaufwendige Lagerung um dessen jeweilige Mittelachse erfordert. Dadurch, dass es umlaufend ausgebildet ist, ist es ferner derart ausbildbar, dass nur eine einzige Antriebsrichtung von Nöten ist. Mit anderen Worten: Das Umlauftor (das umlaufende Tor) muss stets nur in eine Richtung angetrieben werden, um abwechselnd den ersten Zustand und den zweiten Zustand anzunehmen. Hierdurch kann beim Antrieb eines derartigen verschiebbar gelagerten umlaufenden Tors auf aufwendige und in der Richtung veränderbare Antriebe bzw. Getriebe verzichtet werden.

Gemäß einem weiteren Aspekt der Erfindung ist es vorgesehen, dass zum Überwachen des Innenbereichs des Schleusenraums eine Detektoreinrichtung vorgesehen ist, wobei das mindestens eine umlaufende Element nur dann relativ zu den Öffnungen bewegbar ist, wenn die Detektoreinrichtung einen Zustand erfasst, in welchem der Schwenkbereich des mindestens einen umlaufenden Elements frei von hineinragenden Gegenständen ist.

Im einfachsten Fall ist eine derartige Detektoreinreichung eine Lichtschranke oder dergleichen, welche das Vorhandensein von Gegenständen im Innenbereich des Schleusenraums detektiert. Auch kann eine derartige Lichtschranke direkt in dem Schwenkbereich, das heißt in dem Bereich der Durchlassöffnung des mindestens einen umlaufenden Elements vorgesehen sein. Selbstverständlich ist es jedoch auch möglich, als eine derartige Detektoreinreichung eine Kamera oder dergleichen vorzusehen, deren Bild dahingehend automatisiert ausgewertet wird, ob sich in dem Schwenkbereich ein Gegenstand befindet oder nicht.

Die Bewegbarkeit des mindestens einen umlaufenden Elements in Abhängigkeit von dem Zustand, ob oder ob nicht mittels der Detektoreinreichung erfasst wurde, dass der Schwenkbereich des mindestens einen umlaufenden Elements frei von hineinragenden Gegenständen ist, wird hierbei automatisiert durch geeignete Auswertung des Signals von der Detektoreinreichung vorgenommen. Die Bewegbarkeit kann beispielsweise mittels einer mechanischen oder elektronischen Blockierung oder auch einer ansteuerbaren Kupplung (ansteuerbaren Rutschkupplung) oder dergleichen stattfinden. Insbesondere dann, wenn definiert eine große Anzahl von Gegenständen nacheinander ein- bzw. ausgeschleust werden soll, kann es hierbei sinnvoll sein, dass der Antrieb des mindestens einen umlaufenden Elements ununterbrochen mit einer definierten Geschwindigkeit läuft, sodass ein getaktetes Ein- bzw. Ausschleusen der Gegenstände möglich ist. Nur dann wenn aufgrund eines Transport- oder Taktfehlers der Schwenkbereich des mindestens einen umlaufenden Elements im richtigen Zeitpunkt nicht frei von hineinragenden Gegenständen ist, weil beispielsweise ein zu transportierendes Lagerstück in diesem Schwenkbereich hängengeblieben ist, kann dann mittels der ansteuerbaren Kupplung der Antrieb des mindestens einen umlaufenden Elements von diesem getrennt werden und im Leerlauf weiterlaufen, bis die Störung behoben ist oder der Schwenkbereich durch Wiederangleichung an den Transporttakt wieder frei geworden ist. Hierdurch ist ein besonders verschleißarmer Betrieb möglich.

Gemäß einem weiteren Aspekt der erfindungsgemäßen Lösung ist es vorgesehen, dass eine Antriebseinrichtung zum Antreiben des mindestens einen umlaufenden Elements vorgesehen ist, wobei die Antriebseinrichtung mindestens eine vorzugsweise horizontal oder vertikal verlaufendes Antriebselement aufweist.

Das mindestens eine Antriebselement ist vorzugsweise eine Antriebswalze, kann aber auch als Zahnrad, Kettenradantrieb oder Riemenscheibe oder dergleichen ausgebildet sein.

Mittels eines derartigen vorzugsweise horizontal oder vertikal verlaufenden Antriebselements ist es auf besonders einfache Weise möglich, das mindestens eine umlaufende Element anzutreiben.

In diesem Zusammenhang kann es außerdem vorgesehen sein, mindestens einem der Antriebselemente ein gleichsinnig verlaufendes Dichtelement zuzuordnen.

Das mindestens eine Dichtelement ist vorzugsweise eine Dichtwalze, kann aber auch als Zahnrad, Kettenradantrieb oder Riemenscheibe oder dergleichen ausgebildet sein.

Ein derartig gleichsinnig verlaufendes Dichtelement drückt gegen das entsprechende Antriebselement, wobei das mindestens eine umlaufende Element durch einen flexiblen Walzenspalt zwischen dem Antriebselement und dem zugeordneten Dichtelement führbar ist.

Sowohl die Antriebselemente, als auch die Dichtelemente können verhältnismäßig klein und damit leicht antreibbar ausgebildet sein. Selbstverständlich ist es hierbei ausreichend, bei Verwendung von Antriebswalzen und Dichtwalzen nur eine der Walzenarten (die Antriebswalzen) anzutreiben.

Durch das Führen des mindestens einen umlaufenden Elements durch den flexiblen Walzenspalt zwischen Antriebselement und zugeordnetem Dichtelement ist eine zuverlässige und einfache Abdichtung und damit eine hermetische Trennung zwischen den einzelnen Bereichen möglich.

Gemäß einem weiteren Aspekt der Erfindung ist es vorgesehen, dass das mindestens eine umlaufende Element zwei Durchlassöffnungen aufweist, die bezogen auf ihre relative Lage zueinander derart angeordnet sind, dass in einem Zustand, in welchem die erste Durchlassöffnung mit einer der beiden Öffnungen des Schleusenraums fluchtet, die zweite Durchlassöffnung mit keiner der beiden Öffnungen des Schleusenraums fluchtet, und das in einem Zustand, in welchem die zweite Durchlassöffnung mit einer der Öffnungen des Schleusenraums fluchtet, die erste Durchlassöffnung mit keiner der beiden Öffnungen des Schleusenraums fluchtet.

Ein derartiger Aufbau erlaubt ein noch schnelleres Durchschleusen von Lagergut durch die Schleuse. Die beiden Durchlassöffnungen des mindestens einen umlaufenden Elements sind hierbei derart versetzt angeordnet, dass selbstverständlich wiederum kein Zustand herstellbar ist, in welchem sowohl die erste Durchlassöffnung, als auch die zweite Durchlassöffnung gleichzeitig mit den beiden Öffnungen des Schleusenraums fluchtet. Durch das Vorsehen einer entsprechenden zweiten Durchlassöffnung an einer geeigneten Stelle in den mindestens einen umlaufenden Element kann jedoch die Zeit verkürzt werden, die bei einem Durchschleusungsvorgang (Einschleusvorgang von Lagergut oder dergleichen) zwischen dem Herstellen des ersten Zustandes zum beschicken des Schleusenraums und dem Herstellen des zweiten Zustandes zum anschließenden Einschleusen des Lagerguts in den zweiten Bereich vergeht.

Gemäß einem weiteren Aspekt der erfindungsgemäßen Lösung ist es vorgesehen, dass das mindestens eine umlaufende Element als waagerecht verlaufender Drehkörper ausgebildet ist, der eine Trommelwand aufweist, in welcher die mindestens eine Durchlassöffnung ausgebildet ist, und welche relativ zu den Öffnungen des Schleusenraums um eine Mittelachse des Schleusenraums drehbar gelagert ist, sodass durch das Drehen des Drehkörpers die mindestens eine Durchlassöffnung wahlweise mit der ersten Öffnung oder mit der zweiten Öffnung des Schleusenraums fluchtet und jeweils einen Zugang zu diesem ermöglicht.

Besonders vorzugsweise ist die Trommelwand hierbei so ausgebildet, dass der Drehkörper einen Zylinder ausbildet. Der Antrieb eines derartigen Drehkörpers und dessen Lagerung ist bei einem derartigen Aufbau sehr einfach, da ein zentrales Lager und ein zentraler Antrieb vorgesehen sein können.

Gemäß einem weiteren Aspekt der Erfindung ist die Verwendung oben beschriebenen erfindungsgemäßen Vorrichtung als Schleuse zwischen einem inertisierten oder inertisierbaren Raum, insbesondere zwischen einem Lagerraum oder einer Lagerhalle und einem Außenbereich vorgesehen.

Die Verwendung ist hierauf jedoch nicht beschränkt. Die erfindungsgemäße Vorrichtung kann als Schleuse vielfältig und insbesondere überall dort verwendet werden, wo zwei Bereiche ständig auf ihre Atmosphäre bezogen getrennt sein sollen bzw. wo ein Luftaustausch zwischen zwei Bereichen minimiert werden muss. Beispielsweise kann die erfindungsgemäße Vorrichtung als Schleuse auch bei Laboren, chemischen Lagern, pharmazeutischen Lagern, Kühlreumen und dergleichen Verwendung finden.
Gemäß einem weiteren Aspekt der Erfindung ist es vorgesehen, dass eine Anlage zum Lagern und/oder zum Verarbeiten von Gegenständen unter inerten Bedingungen einen von einer Raumhülle umschlossenen Bereich aufweist, wobei die Raumhülle zumindest bereichsweise als Wand ausgebildet ist, in der mindestens eine Öffnung vorgesehen ist, zum Einbringen von Gegenständen in den umschlossenen Bereich; und wobei die Anlage eine oben beschriebene erfindungsgemäße Vorrichtung aufweist, wobei der Schleusenraum der Vorrichtung in der Wandöffnung des umschlossenen Bereichs angeordnet ist; und wobei die Anlage eine Einrichtung zum vorzugsweise bedarfsweisen Bereitstellen eines Inertgases in Gestalt eines Sauerstoff verdrängenden Gases oder Gasgemisches aufweist, wobei die Einreichung derart ansteuerbar ist, dass zur Ausbildung einer sauerstoffreduzierten Atmosphäre in dem umschlossenen Bereich zumindest ein Teil des bereit gestellten Inertgases in den umschlossenen Bereich geleitet wird.
Nachfolgend werden beispielshafte Ausführungsformen der erfindungsgemäßen Lösung anhand einer Zeichnung näher erläutert.
Es zeigen:
- Fig. 1:: Eine seitliche Schnittansicht auf eine nicht erfindungsgemäße Vorrichtung zum Bereitstellen eines Übergangs zwischen einem ersten Bereich und einem mit Hilfe einer Wand von dem ersten Bereich hermetisch abgegrenzten zweiten Bereich;

- Fig. 2:: Eine seitliche Schnittansicht analog zu Figur 1 für eine erfindungsgemäße Vorrichtung gemäß einer Ausführungsform der Erfindung;
- Fig. 3:: Eine seitliche Schnittansicht analog zu Figuren 1 und 2 auf eine nicht erfindungsgemäße Vorrichtung gemäß einer weiteren Ausführungsform der Erfindung;
- Fig. 4:: Eine seitliche Schnittansicht analog zu den Figuren 1 bis 3 auf eine erfindungsgemäße Vorrichtung gemäß einer weiteren Ausführungsform der Erfindung; und
- Fig. 5:: Eine Schnittansicht in Draufsicht auf eine erfindungsgemäße Vorrichtung zum Bereitstellen eines Übergangs zwischen einem ersten Bereich und einem mit Hilfe einer Wand von dem ersten Bereich hermetisch abgegrenzten zweiten Bereich gemäß einer fünften Ausführungsform der Erfindung.

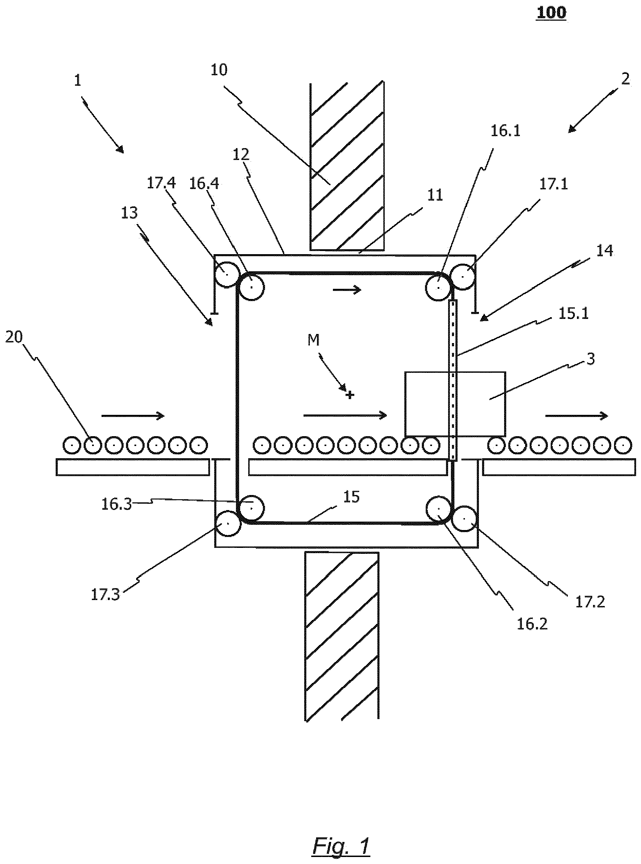

Figur 1 zeigt eine seitliche Schnittansicht auf eine erfindungsgemäße Vorrichtung 100 zum Bereitstellen eines Übergangs zwischen einem ersten Bereich 1 und einem mit Hilfe einer Wand 10 von dem ersten Bereich 1 hermetisch abgegrenzten zweiten Bereich 2. In dem Beispiel ist der erste Bereich 1 nicht inertisiert, das heißt es liegt normale Umgebungsatmosphäre vor. Der zweite Bereich 2 hingegen ist ein dauerinertisierter oder dauerhaft teilinertisierter Raum, beispielsweise ein Lagerraum, in welchem zur Reduzierung eines Brandrisikos ein geeignetes Inertgas wie beispielsweise Stickstoff, Argon oder dergleichen eingebracht ist.
Der ersten Bereich 1 ist von dem zweiten Bereich 2 mittels einer Wand 10 abgetrennt, wobei zum Einschleusen von Lagergut 3 in der Wand 10 eine Öffnung 11 ausgebildet ist. Selbstverständlich dient diese Öffnung 11 auch dem anschließenden Wiederausschleusen von Lagergut 3 in die entgegengesetzte Richtung, das heißt aus dem Bereich 2 in den Bereich 1. Das in Fig. 1 schematisch angedeutete Lagergut 3 wird hierbei auf aneinander angrenzenden drehbeweglich gelagerten Förderrollen 20 transportiert. Die Förderrollen 20 können zum Bewegen des Lagerguts 3 selbst angetrieben sein; alternativ ist es jedoch auch möglich, das Lagergut 3 durch Ausnutzen dessen träger Masse passiv auf nicht angetriebenen Förderrollen zwischen den Bereichen 1, 2 unter Passage der Vorrichtung 100 zu bewegen.

Wie aus der Seitenansicht in Figur 1 ersichtlich ist, ist bei der insgesamt mit 100 bezeichneten erfindungsgemäßen Vorrichtung gemäß der ersten Ausführungsform ein Schleusenraum 12 in die in der Wand 10 vorgesehene Öffnung 11 eingesetzt. Dieser Schleusenraum 12 weist seinerseits eine erste Öffnung 13 und eine zweite Öffnung 14 auf. Die erste Öffnung 13 bildet einen Übergang zwischen dem ersten Bereich 1 und dem Schleusenraum 12. Analog dazu bildet die zweite Öffnung 14 einen Übergang zwischen dem zweiten Bereich 2 und dem Schleusenraum 12.
Innerhalb des Schleusenraums 12 ist ein umlaufendes Element 15 angeordnet, das seinerseits im wesentlichen gasdicht ist und hierzu aus einem geeigneten Material wie beispielsweise einem begrenzt flexiblen Gummimaterial oder dergleichen besteht.
Das umlaufende Element 15 ist innerhalb des Schleusenraums 12 um vier Antriebswalzen 16.1, 16.2, 16.3, 16.4 gespannt und kann in Umlaufrichtung, welche durch einen kurzen Pfeil gekennzeichnet ist, ähnlich einem Förderband umlaufend innerhalb des Schleusenraums 12 angetrieben werden.

Gemäß der in Figur 1 dargestellten ersten nicht erfindungsgemäßen Ausführungsform weist das umlaufende Element 15 eine einzige Durchlassöffnung 15.1 auf, welche durch einen entsprechenden Antrieb der Antriebswalzen 16.1, 16.2, 16.3, 16.4 in mehrere Stellungen gebracht werden kann. In der in Figur 1 dargestellten Stellung fluchtet die zweite Öffnung 14 des Schleusenraums mit der Durchlassöffnung 15.1 des umlaufenden Elements 15, sodass eine Durchtrittsverbindung zwischen dem Inneren des Schleusenraums 12, das heißt dem von dem umlaufenden Element 15 umspannten Innenraum und dem zweiten Bereich 2 entsteht. Durch ein entsprechendes Bewegen des umlaufenden Elements 15 mittels der Antriebswalzen 16.1, 16.2, 16.3, 16.4 ist dann diese Öffnung 15.1 des umlaufenden Elements 15 zunächst so bewegbar, dass weder mit der ersten Öffnung 13 noch mit der zweiten Öffnung 14 eine fluchtende Verbindung besteht. In diesem Fall ist der innerhalb des Schleusenraums 12 angeordnete Innenraum, der von dem umlaufenden Element 15 begrenzt wird, hermetisch abgeschlossen. Wird nun das umlaufende Element 15 mittels der Antriebswalzen 16.1, 16.2, 16.3, 16.4 weiterbewegt, so fluchtet die Durchlassöffnung 15.1 des umlaufenden Elements 15 anschließend mit der ersten Öffnung 13 und stellt somit eine Verbindung des Innenraums, der von dem umlaufenden Element 15 begrenzt wird, das heißt dem Inneren des Schleusenraums 12, mit dem ersten Bereich 1 her.

In diesem fluchtenden Zustand können dann beispielsweise in zweiten Bereich 2, das heißt in den Lagerraum einzudringende Gegenstände (Lagergut 3) in das Innere des Schleusenraums 12 eingebracht werden. Bei einem weiteren Bewegen des umlaufenden Elements 15 wird wiederum ein Zustand angenommen, in welchem der von dem umlaufenden Element 15 umschlossenen Bereich innerhalb des Schleusenraums 12 weder mit dem ersten Bereich 1 noch mit dem zweiten Bereich in Verbindung steht. In diesem Zustand kann dann beispielsweise ein Inertgas, welches auch in dem zweiten Bereich 2 vorhanden ist, in diesen Innenraum innerhalb des Schleusenraums 12 eingeleitet werden.
Nach einem weiteren Bewegen des umlaufenden Elements 15 mittels der Antriebwalzen 16.1, 16.2, 16.3, 16.4 ist dann der in Figur 1 dargestellte Zustand wieder hergestellt. Dadurch, das in den Innenraum, der von dem umlaufenden Element 15 begrenzt wird, eine entsprechende Inertgaskonzentration eingeleitet wurde, erfolgt dann beim Einschleusen des Lagerguts 3 durch die fluchtende Durchlassöffnung 15.1 in den zweiten Bereich 2 nur ein reduzierter Sauerstoffeintrag.
Um jeweils die gasdichten Zustände aufrechterhalten zu können, sind den Antriebswalzen 16.1, 16.2, 16.3, 16.4 jeweils gegenüberliegend an der Innenwand des Schleusenraums 12 zugehörige gleichsinnig umlaufende Dichtwalzen 17.1, 17.2, 17.3, 17.4 zugeordnet. Da insbesondere eine definierte Abdichtung des inertisierten zweiten Bereichs 2 nötig ist, kann dann, wenn kein Zwischenfluten des von dem umlaufenden Element 15 umschlossenen Innenraum beim Einbringen von Lagergut 3 vorgesehen ist, auch auf die Dichtwalzen 17.3 und 17.4 verzichtet werden.

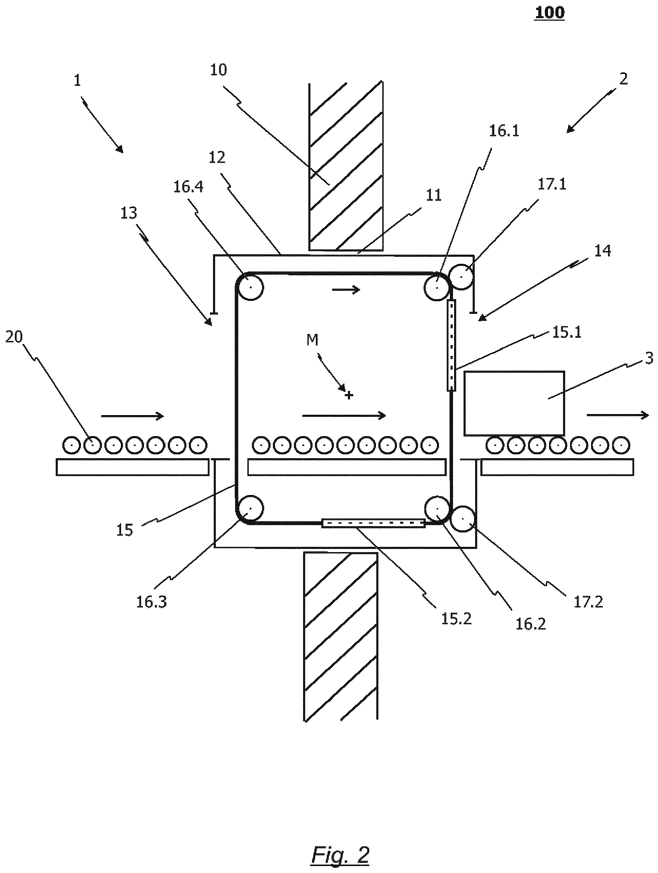

Figur 2 zeigt in seitlicher Schnittansicht eine Ausführungsform der erfindungsgemäßen Vorrichtung 100, die eine Abwandlung der Vorrichtung 100 gemäß der ersten Ausführungsform darstellt. Im Unterschied zur Darstellung aus Figur 1 das heißt im Unterschied zur ersten Ausführungsform ist auf die Dichtwalzen 17.3 und 17.4 verzichtet worden. Außerdem weist das umlaufende Element 15 nun neben der ersten Durchlassöffnung 15.1 eine weitere zweite Durchlassöffnung 15.2 auf. Wie aus der seitlichen Schnittansicht aus Figur 2 ersichtlich ist, sind die Ausmaße und die jeweilige Anordnung der Durchlassöffnungen 15.1, 15.2 derart gestaltet, dass bei einem Antrieb des umlaufenden Elements 15 mittels der Antriebswalzen 16.1, 16.2, 16.3, 16.4 zu keinem Zeitpunkt eine direkte Durchlassverbindung, das heißt ein direktes Fluchten beider Durchlassöffnungen 15.1, 15.2 jeweils mit der ersten Öffnungen 13 bzw. der zweiten Öffnung 14 vorliegt. Mit anderen Worten: eine hermetische Trennung zwischen dem ersten Bereich 1 und dem zweiten Bereich 2 ist auch bei einem Umlauf des umlaufenden Elements 15 jederzeit gegeben.
Durch das Vorsehen einer zusätzlichen zweiten Durchlassöffnung 15.2 in dem umlaufenden Element 15 kann insbesondere getaktetem Einschleusen des Lagerguts 3 die Einschleuszeit verringert werden, da bei weiterhin bestehender hermetischer Abdichtung zwischen dem ersten Bereich 1 und dem zweiten Bereich 2 und dem damit einhergehenden nur definierten Einbringen von Sauerstoff in den inertisierten zweiten Bereich 2 im Vergleich mit der ersten Ausführungsform öfter ein Zustand herstellbar ist, in welchem das Lagergut 3 in das innere des Schleusenraums 12 eingebracht werden bzw. aus diesem wieder herausgeführt werden kann.

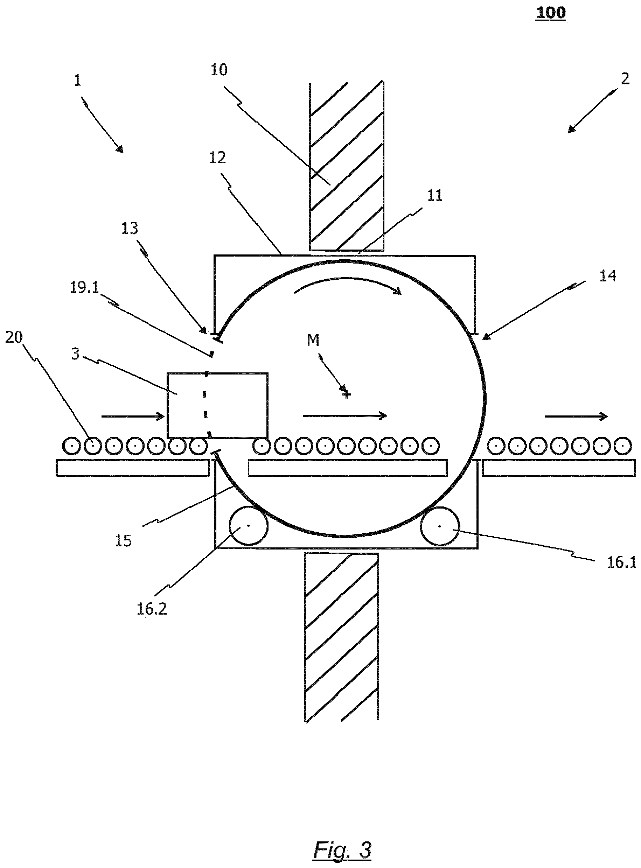

Figur 3 zeigt in seitlicher Schnittansicht die erfindungsgemäße Vorrichtung 100 gemäß einer weiteren nicht erfindungsgemäßen Ausführungsform. Um eine horizontale Mittelachse M ist bei dieser dritten Ausführungsform das umlaufende Element 15 als zylindrischer und waagerecht verlaufender Drehkörper ausgebildet. Dieser Drehkörper weist eine Trommelwand auf, in welcher bei der dritten Ausführungsform der erfindungsgemäßen Lösung eine Durchlassöffnung 19.1 ausgebildet ist, die relativ zu den Öffnungen 13, 14 des Schleusenraums 12 um die Mittelachse drehbar ist. Durch das Drehen dieses Drehkörpers um die Mittelachse ist die Durchlassöffnung 19.1 wahlweise mit der ersten Öffnung 13 oder der zweiten Öffnung 14 des Schleusenraums 12 zum ersten Bereich 1 bzw. zum zweiten Bereich 2 in fluchtende Verbindung bringbar. Das Vorsehen eines drehbar gelagerten Drehkörpers bietet sich insbesondere an, wenn eine einfache seitliche Lagerung dieses Drehkörpers möglich ist. Zum Antrieb des Drehkörpers, das heißt zum Antrieb des zylindrischen umlaufenden Elements 15, sind bei der dritten Ausführungsform zwei Antriebswalzen 16.1, 16.2 vorgesehen, welche bei dieser Ausführungsform jedoch nicht erforderlich sind, um das umlaufende Element 15 zu spannen und in Form zu halten. Es ist daher auf einfache Weise möglich diese Antriebswalzen 16.1, 16.2 von außen gegen den Drehkörper, das heißt gegen das umlaufende Element 15 zu drücken und die Antriebskraft zum Umlauf des umlaufenden Elements 15 extern aufzubringen.

Im übrigen sei auf die Ausführungen zu Ausführungsform 1 verwiesen.

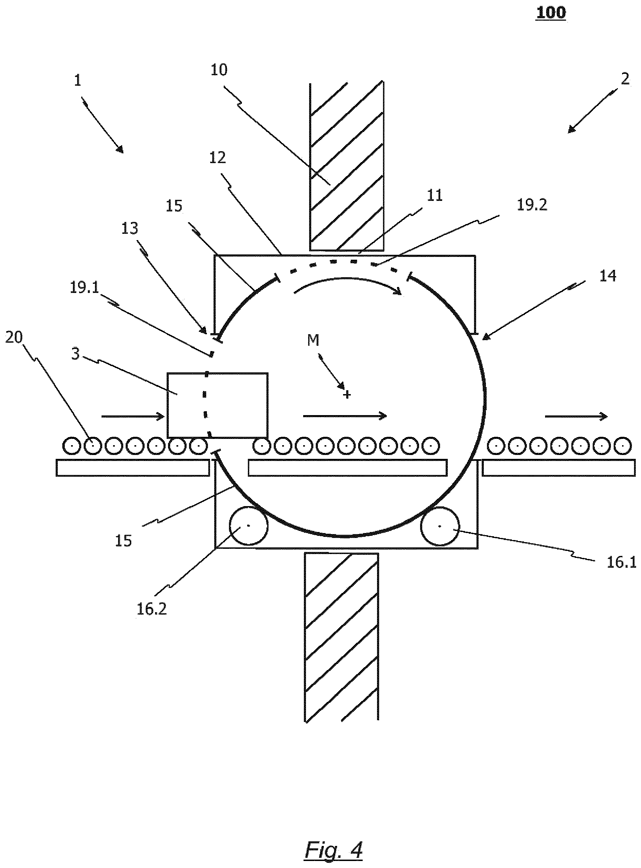

Figur 4 zeigt in seitlicher Schnittansicht eine erfindungsgemäße Vorrichtung 100 gemäß einer weiteren Ausführungsform der Erfindung ähnlich der dritten Ausführungsform aus Figur 3.

Bei der Vorrichtung 100 gemäß dieser Ausführungsform ist zusätzlich zu der ersten Durchlassöffnung 19.1 in dem Drehkörper eine zweite Durchlassöffnung 19.2 vorgesehen, welche relativ zur ersten Durchlassöffnung 19.1 versetzt angeordnet ist. Wiederum und analog zur Ausführungsform in Figur 2 kann das umlaufende Element 15, das heißt der zylindrische Drehkörper wiederum nicht in eine Stellung gebracht werden, in welcher die erste Durchlassöffnung 19.1 und die zweite Durchlassöffnung 19.2 gleichzeitig mit den Öffnungen 13 bzw. 14 fluchten, sodass zu jeder Zeit eine hermetische Abbdichtung zwischen dem ersten Bereich 1 und dem zweiten Bereich 2 vorherrscht.
Gleichzeitig erlaubt jedoch eine Ausführung entsprechend Ausführungsform 4 die gleichen Vorteile wie bei Ausführungsform 2, das heißt grundsätzlich einen erhöhten Ein- bzw. Ausschleusungstakt von ein- bzw. auszulagerndem Lagergut.

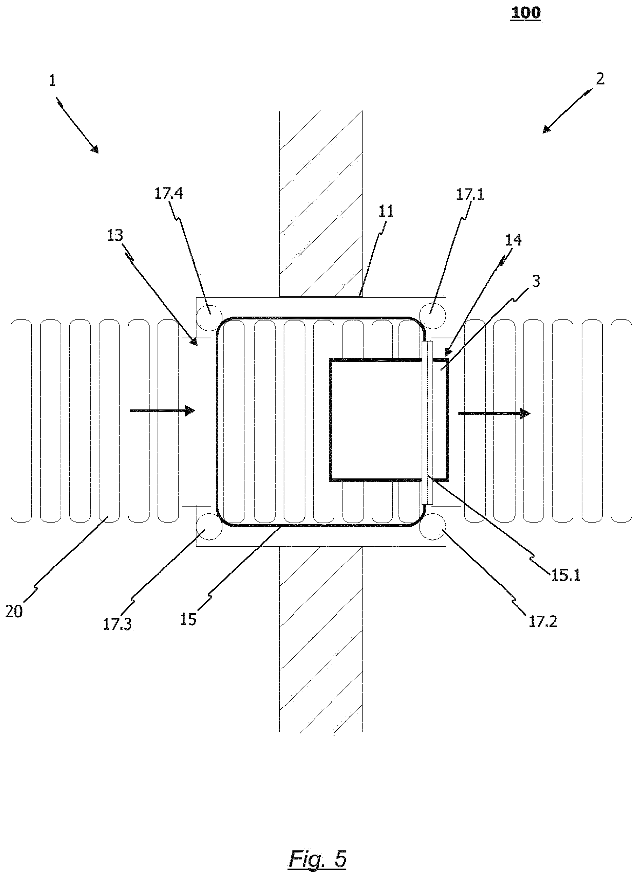

Fig. 5 zeigt eine Schnittansicht in Draufsicht auf eine erfindungsgemäße Vorrichtung 100 zum Bereitstellen eines Übergangs zwischen einem ersten Bereich 1 und einem mit Hilfe einer Wand 10 von dem ersten Bereich 1 hermetisch abgegrenzten zweiten Bereich 2 gemäß einer fünften Ausführungsform der Erfindung.
Die in Fig. 5 dargestellte Vorrichtung 100 gemäß der fünften Ausführungsform unterscheidet sich von der oben beschriebenen ersten Ausführungsform dadurch, dass sowohl das umlaufende Element 15, als auch die zugehörigen der Einfachheit halber nicht dargestellten Antriebselemente (Antriebswalzen) und ihre jeweils zugeordneten Dichtwalzen 17.1, 17.2, 17.3, 17.4 vertikal verlaufen.
Wie aus Fig. 5 ersichtlich, ist das Lagergut 3 wiederum auf Förderrollen 3 durch den Schleusenraum der Vorrichtung 100 hindurch zwischen dem ersten Bereich 1 und dem zweiten Bereich 2 unter Passage der Durchlassöffnung 15.1 des umlaufenden Elements 15 bewegbar. Im übrigen sei auf die obigen Ausführungen verwiesen.

Es sei an dieser Stelle darauf hingewiesen, dass die Ausführungsformen nicht einschränkend aufgefasst werden sollen. Insbesondere können die Ausführungsformen der Erfindung beliebig miteinander kombiniert und/oder im Rahmen der Erfindung abgewandelt werden. Derartige Kombinationen, Abwandlungen und/oder Ergänzungen sind dem Fachmann geläufig.

### Bezugszeichenliste

- 100: Vorrichtung zum Bereitstellen eines Übergangs
- 1: Erster Bereich
- 2: Zweiter Bereich
- 3: Lagergut
- 10: Wand
- 11: Öffnung
- 12: Schleusenraum
- 13: Erste Öffnung
- 14: Zweite Öffnung
- 15: Umlaufendes Element
- 15.1, 19.1, 15.2, 19.2: Durchlassöffnung
- M: Mittelachse
- 16.1, 16.2, 16.3, 16.4: Antriebswalze
- 17.1, 17.2: Dichtwalze
- 20: Förderrolle

## Patentansprüche

1. Vorrichtung (100) zum Bereitstellen eines Übergangs zwischen einem Außenbereich (1) und einem mit Hilfe einer Wand (10) von dem Außenbereich (1) hermetisch abgegrenzten inertisierten oder inertisierbaren Raum (2), wobei die Vorrichtung (100) folgendes aufweist:
- einen in eine in der Wand (10) vorgesehene Öffnung (11) einsetzbaren Schleusenraum (12), welcher eine erste Öffnung (13) aufweist, welche einen Übergang zwischen dem Außenbereich (1) und dem Schleusenraum (12) bildet, und welcher eine zweite Öffnung (14) aufweist, welche einen Übergang zwischen dem inertisierten oder inertisierbaren Raum (2) und dem Schleusenraum (12) bildet; und
- mindestens ein umlaufendendes Element (15), welches mindestens eine Durchlassöffnung (15.1; 19.1; 15.2, 19.2) aufweist und relativ zu der ersten und der zweiten Öffnung (13, 14) des Schleusenraums (12) derart bewegbar ist, dass wahlweise zumindest ein erster Zustand, in welchem die mindestens eine Durchlassöffnung (15.1; 19; 19.1) im Wesentlichen mit der ersten Öffnung (13) des Schleusenraums (12) fluchtet und einen Zugang von dem Außenbereich (1) in den Schleusenraum (12) ermöglicht und das umlaufende Element (15) die zweite Öffnung (14) des Schleusenraums (12) im Wesentlichen vollständig bedeckt, und ein zweiter Zustand realisierbar sind, in welchem die mindestens eine Durchlassöffnung (15.1; 19.1; 15.2, 19.2) oder mindestens eine weitere Durchlassöffnung (15.1, 19.1, 15.2, 19.2) im Wesentlichen mit der zweiten Öffnung (14) des Schleusenraums (12) fluchtet und einen Zugang von dem inertisierten oder inertisierbaren Raum (2) in den Schleusenraum (12) ermöglicht und das umlaufende Element (15) die erste Öffnung (13) des Schleusenraums (12) im Wesentlichen vollständig bedeckt,
wobei das mindestens eine umlaufende Element (15) zwei Durchlassöffnungen (15.1, 15.2) aufweist, die bezogen auf ihre relative Lage zueinander derart angeordnet sind, dass in einem Zustand, in welchem die erste Durchlassöffnung (15.1) mit einer der beiden Öffnungen (13, 14) des Schleusenraums (12) fluchtet, die zweite Durchlassöffnung (15.2) mit keiner der beiden Öffnungen (13, 14) des Schleusenraumes (12) fluchtet, und dass in einem Zustand, in welchem die zweite Durchlassöffnung (15.2) mit einer der Öffnungen (13, 14) des Schleusenraums (12) fluchtet, die erste Durchlassöffnung (15.1) mit keiner der beiden Öffnungen (13, 14) des Schleusenraums (12) fluchtet.

2. Vorrichtung nach Anspruch 1,
wobei das mindestens eine umlaufende Element (15) ein innerhalb des Schleusenraums (12) angeordnetes und relativ zu den Öffnungen (13, 14) des Schleusenraums (12) vorzugsweise um eine horizontale oder vertikale Mittelachse (M) des Schleusenraums (12) verschiebbar gelagertes umlaufendes Tor ist.

3. Vorrichtung nach Anspruch 1 oder 2,
wobei eine Detektoreinrichtung zum Überwachen des Innenbereichs des Schleusenraums (12) vorgesehen ist, wobei das mindestens eine umlaufende Element (15) nur dann relativ zu den Öffnungen (13, 14) bewegbar ist, wenn die Detektoreinrichtung einen Zustand erfasst, in welchem der Schwenkbereich des mindestens einen umlaufenden Elements (15, 15.3, 15.4, 15.5) frei von hineinragenden Gegenständen ist.

4. Vorrichtung nach einem der Ansprüche 1 bis 3,
wobei eine Antriebseinrichtung zum Antreiben des mindestens einen umlaufenden Elements (15) vorgesehen ist, wobei die Antriebseinrichtung mindestens ein vorzugsweise horizontal oder vertikal verlaufendes Antriebselement (16.1, 16.2, 16.3, 16.4) aufweist, wobei das mindestens eine Antriebselement (16.1, 16.2, 16.3, 16.4) vorzugsweise eine Antriebswalze ist.

5. Vorrichtung nach Anspruch 4,
wobei mindestens einem der Antriebselemente (16.1, 16.2) ein gleichsinnig verlaufendes Dichtelement (17.1, 17.2), vorzugsweise eine gleichsinnig verlaufende Dichtwalze, zugeordnet ist, welches gegen das entsprechende Antriebselement (16.1, 16.2) drückt, wobei das mindestens eine umlaufende Element (15) durch einen flexiblen Walzenspalt zwischen dem Antriebselement (16.1, 16.2) und dem zugeordneten Dichtelement (17.1, 17.2) führbar ist.

6. Vorrichtung nach einem der Ansprüche 1 bis 5,
wobei das mindestens eine umlaufende Element (15) als waagerecht oder senkrecht verlaufender Drehkörper ausgebildet ist, der eine Trommelwand aufweist, in welcher die mindestens eine Durchlassöffnung (19; 19.1, 19.2) ausgebildet ist, und welche relativ zu den Öffnungen (13, 14) des Schleusenraums (12) um eine Mittelachse (M) des Schleusenraums (12) derart drehbar ist, dass durch das Drehen des Drehkörpers die mindestens eine Durchlassöffnung (19; 19.1, 19.2) wahlweise mit der ersten Öffnung (13) oder mit der zweiten Öffnung (14) des Schleusenraums (12) fluchtet und jeweils einen Zugang zu diesem ermöglicht.

7. Anlage zum Lagern und/oder Verarbeiten von Gegenständen unter inerten Bedingungen, wobei die Anlage folgendes aufweist:
- einen von einer Raumhülle umschlossenen Bereich (2), wobei die Raumhülle zumindest bereichsweise als Wand (10) ausgebildet ist, in der mindestens eine Öffnung (11) vorgesehen ist zum Einbringen von Gegenständen in den umschlossenen Bereich (2);
- eine Vorrichtung (100) nach einem der Ansprüche 1 bis 6, wobei der Schleusenraum (12) der Vorrichtung (100) in der Wandöffnung (11) des umschlossenen Bereiches (2) angeordnet ist; und
- eine Einrichtung zum vorzugsweise bedarfsweisen Bereitstellen eines Inertgases in Gestalt eines sauerstoffverdrängenden Gases oder Gasgemisches, wobei die Einrichtung derart ansteuerbar ist, dass zur Bildung einer sauerstoffreduzierten Atmosphäre in dem umschlossenen Bereich (2) zumindest ein Teil des bereitgestellten Inertgases in den umschlossenen Bereich (2) geleitet wird.

## Claims

1. A device (100) for providing a passage between an external area (1) and a room (2) which is or can be rendered inert which is hermetically delimited from the external area (1) by means of a wall (10), wherein
the device (100) comprises the following:
- an airlock chamber (12) able to be inserted into an opening (11) provided in the wall (10) which has a first opening (13) forming a passage between the external area (1) and the airlock chamber (12) and which has a second opening (14) forming a passage between the room (2) rendered or able to be rendered inert and the airlock chamber (12); and
- at least one revolving element (15) which has at least one passage opening (15.1; 19.1; 15.2, 19.2) and which can be moved relative to the first and the second opening (13, 14) of the airlock chamber (12) so as to enable alternatingly realizing at least one first state in which the at least one passage opening (15.1; 19; 19.1) substantially aligns with the first opening (13) of the airlock chamber (12) and allows entry into the airlock chamber (12) from the external area (1) and the revolving element (15) essentially completely covers the second opening (14) of the airlock chamber (12), and a second state in which the at least one passage opening (15.1; 19.1; 15.2, 19.2) or at least a further passage opening (15.1, 19.1, 15.2, 19.2) substantially aligns with the second opening (14) of the airlock chamber (12) and allows entry into the airlock chamber (12) from the room (2) rendered or able to be rendered inert and the revolving element (15) essentially completely covers the first opening (13) of the airlock chamber (12),
wherein the at least one revolving element (15) has two passage openings (15.1, 15.2) arranged in relation to their relative position to one another such that in a state in which the first passage opening (15.1) aligns with one of the two openings (13, 14) of the airlock chamber (12), the second passage opening (15.2) is not aligned with either of the two openings (13, 14) of the airlock chamber (12), and in a state in which the second passage opening (15.2) aligns with one of the openings (13, 14) of the airlock chamber (12), the first passage opening (15.1) is not aligned with either of the two openings (13, 14) of the airlock chamber (12).

2. The device according to claim 1,
wherein the at least one revolving element (15) is a revolving door disposed within the airlock chamber (12) and displaceably mounted relative to the openings (13, 14) of the airlock chamber (12), preferably about a horizontal or vertical central axis (M) of said airlock chamber (12).

3. The device according to claim 1 or 2,
wherein a detector mechanism is provided to monitor the interior area of the airlock chamber (12), wherein the at least one revolving element (15) can then only move relative to the openings (13, 14) when the detector mechanism detects a state in which no objects are projecting into the pivoting range of the at least one revolving element (15, 15.3, 15.4, 15.5).

4. The device according to one of claims 1 to 3,
wherein a drive mechanism is provided to drive the at least one revolving element (15), wherein the drive mechanism comprises at least one horizontally or vertically running drive element (16.1, 16.2, 16.3, 16.4), wherein the at least one drive element (16.1, 16.2, 16.3, 16.4) is preferably a drive roller.

5. The device according to claim 4,
wherein a sealing element (17.1, 17.2) running in the same direction, preferably a sealing roller running in the same direction, is allocated to at least one of the drive elements (16.1, 16.2), same pressing against the respective drive element (16.1, 16.2), wherein the at least one revolving element (15) can be guided through a flexible roller gap between the drive element (16.1, 16.2) and the associated sealing element (17.1, 17.2).

6. The device according to one of claims 1 to 5,
wherein the at least one revolving element (15) is designed as a horizontally or vertically running rotating body comprising a drum wall in which the at least one passage opening (19; 19.1, 19.2) is formed and which can be rotated about a central axis (M) of the airlock chamber (12) relative to the openings (13, 14) of the airlock chamber (12) such that the revolving of the rotating body enables the at least one passage opening (19; 19.1, 19.2) to alternatingly align with the first opening (13) or with the second opening (14) of the airlock chamber (12) and in each case allow entry to same.

7. An installation for storing and/or processing objects under inert conditions,
wherein the installation comprises the following:
- an area (2) enclosed by a spatial shell, wherein at least part of the spatial shell is designed as a wall (10) in which at least one opening (11) is provided for introducing objects into the enclosed area (2);
- a device (100) in accordance with one of claims 1 to 6, wherein the airlock chamber (12) of the device (100) is arranged in the wall opening (11) of the enclosed area (2); and
- a mechanism for the preferably as-needed providing of an inert gas in the form of an oxygen-displacing gas or gas mixture, wherein the mechanism is controllable such that at least a portion of the inert gas provided is directed into the enclosed area (2) to establish an oxygen-reduced atmosphere in the enclosed area (2).

## Revendications

1. Dispositif (100) pour réaliser une transition entre une zone extérieure (1) et un espace (2) inertisé ou inertisable hermétiquement séparé de la zone extérieure à l'aide d'une paroi (10), le dispositif (100) comprenant :
- un espace formant sas (12) qui est susceptible d'être mis en place dans une ouverture (11) prévue dans la paroi (10) et qui présente une première ouverture (13) qui constitue une transition entre la zone extérieure (1) et l'espace formant sas (12) et qui présente une seconde ouverture (14) qui constitue une transition entre l'espace inertisé ou inertisable (2) et l'espace formant sas (12) ; et
- au moins un élément (15) en circulation qui présente au moins une ouverture traversante (15.1 ; 19.1 ; 15.2, 19.2) et qui est mobile par rapport à la première et à la seconde ouverture (13, 14) de l'espace formant sas (12) de manière à pouvoir réaliser au choix au moins un premier état dans lequel ladite au moins une ouverture traversante (15.1 ; 19 ; 19.1) est sensiblement en alignement avec la première ouverture (13) de l'espace formant sas (12) et qui permet un accès depuis la zone extérieure (1) jusque dans l'espace formant sas (12) et dans lequel l'élément (15) en circulation recouvre sensiblement complètement la seconde ouverture (14) de l'espace formant sas (12), et un second état dans lequel ladite au moins une ouverture traversante (15.1 ; 19.1 ; 15.2, 19.2) ou au moins une autre ouverture traversante (15.1, 19.1, 19.2) est sensiblement en alignement avec la seconde ouverture (14) de l'espace formant sas (12) et qui permet un accès depuis l'espace inertisé ou inertisable (2) jusque dans l'espace formant sas (12) et dans lequel l'élément (15) en circulation recouvre sensiblement complètement la première ouverture (13) de l'espace formant sans (12),
dans lequel ledit au moins un élément (15) en circulation présente deux ouvertures traversantes (15.1, 15.2) qui sont disposées de telle sorte l'une par rapport à l'autre dans leur position relative que dans un état dans lequel la première ouverture traversante (15.1) est en alignement avec l'une des deux ouvertures (13, 14) de l'espace formant sas (12), la seconde ouverture traversante (15.2) n'est en alignement avec aucune des deux ouvertures (13, 14) de l'espace formant sas (12) et que dans un état dans lequel la seconde ouverture traversante (15.2) est en alignement avec l'une des ouvertures (13, 14) de l'espace formant sas (12), la première ouverture traversante (15.1) n'est en alignement avec aucune des deux ouvertures (13, 14) de l'espace formant sas (12).

2. Dispositif selon la revendication 1,
dans lequel ledit au moins un élément (15) en circulation est une porte en circulation agencée à l'intérieur de l'espace formant sas (12) et montée mobile par rapport aux ouvertures (13, 14) de l'espace formant sas (12) de préférence autour d'un axe central (M) horizontal ou vertical de l'espace formant sas (12).

3. Dispositif selon la revendication 1 ou 2,
dans lequel est prévu un moyen de détection pour surveiller la zone intérieure de l'espace formant sas (12), ledit au moins un élément (15) en circulation n'étant mobile par rapport aux ouvertures (13, 14) que lorsque le moyen de détection détecte un état dans lequel la zone de pivotement dudit au moins un élément (15, 15.3, 15.4, 15.5) en circulation est dépourvue d'objets en saillie dans celle-ci.

4. Dispositif selon l'une des revendications 1 à 3,
dans lequel est prévu un moyen d'entraînement pour entraîner ledit au moins un élément (15) en circulation, le moyen d'entraînement comprenant au moins un élément d'entraînement (16.1, 16.2, 16.3, 16.4) qui s'étend de préférence horizontalement ou verticalement, ledit au moins un élément d'entraînement (16.1, 16.2, 16.3, 16.4) étant de préférence un rouleau d'entraînement.

5. Dispositif selon la revendication 4,
dans lequel un élément d'étanchéité (17.1, 17.2), de préférence un rouleau d'étanchéité, est associé à l'un au moins des éléments d'entraînement (16.1, 16.2), qui s'étend dans le même sens et qui pousse contre l'élément d'entraînement correspondant (16.1, 16.2), ledit au moins un élément (15) en circulation pouvant être mené à travers une emprise flexible entre l'élément d'entraînement (16.1, 16.2) et l'élément d'étanchéité associé (17.1, 17.2).

6. Dispositif selon l'une des revendications 1 à 5,
dans lequel ledit au moins un élément (15) en circulation est réalisé sous forme de corps rotatif qui s'étend horizontalement ou verticalement et qui comprend une paroi de tambour dans laquelle est ménagée ladite au moins une ouverture traversante (19 ; 19.1, 19.2) et qui est rotative par rapport aux ouvertures (13, 14) de l'espace formant sas (12) autour d'un axe central (M) de l'espace formant sas (12), de telle sorte que par rotation du corps rotatif ladite au moins une ouverture traversante (19 ; 19.1, 19.2) est au choix en alignement avec la première ouverture (13) ou avec la seconde ouverture (14) de l'espace formant sas (12) et qui permet respectivement un accès à celui-ci.

7. Installation pour stocker et/ou traiter des objets dans des conditions inertes, l'installation comprenant :
- une zone (2) enfermée par une enceinte, l'enceinte étant réalisée au moins localement sous forme de paroi (10) dans laquelle est prévue au moins une ouverture (11) pour introduite des objets dans la zone enfermée (2) ;
- un dispositif (100) selon l'une des revendications 1 à 6, l'espace formant sas (12) du dispositif (100) étant agencé dans l'ouverture de paroi (11) de la zone enfermée (2) ; et
- un système pour fournir de préférence selon les besoins un gaz inerte sous la forme d'un gaz ou d'un mélange gazeux chassant l'oxygène, le système étant pilotable de manière à mener dans la zone enfermée (2) au moins une partie du gaz inerte fourni, afin de former une atmosphère à oxygène réduit dans la zone enfermée (2).
